# EUROPÄISCHE PATENTANMELDUNG

(11) **EP 2 960 120 A1**
(43) Veröffentlichungstag der Anmeldung: **30.12.2015**
(21) Anmeldenummer: 15165864.8
(22) Anmeldetag: 30.04.2015
(51) Int. Cl.: B60T 5/00, F16D 65/84, F16D 65/82

(54) **TRIEBFAHRWERK FÜR EIN SCHIENENFAHRZEUG**

(30) Priorität: 23.06.2014 DE 102014211970
(71) Anmelder: Siemens Aktiengesellschaft, 80333 München (DE)
(72) Erfinder: Kammler, Michael, 47906 Kempen (DE)

(57) **Zusammenfassung**

Die Erfindung betrifft ein Triebfahrwerk für ein Schienenfahrzeug, mit einem belüfteten Elektromotor (7), der eine Antriebswelle (6) aufweist und bei dem Kühlluft mittels eines Lüfters über innenliegende Kühlkanäle (10) längs der Antriebswelle (6) des Elektromotors durch dessen Aktivteil (11) geführt ist, und einer Bremsvorrichtung, wobei die Bremsvorrichtung eine im Bremsfall auf eine Bremsscheibe (15; 25) einwirkende Bremseinrichtung (17) aufweist, wobei die Bremsscheibe (15; 25) dem Elektromotor (7) benachbart auf der Antriebswelle (6) des Elektromotors (7) drehfest angeordnet ist und der Lüfter die Kühlluft sowohl durch den Aktivteil (11) des Elektromotors (7) als auch über/durch die Bremsscheibe (15; 25) führt.

## Beschreibung

Die Erfindung bezieht sich auf ein Triebfahrwerk für ein Schienenfahrzeug, mit einem belüfteten Elektromotor, der eine Antriebswelle aufweist und bei dem Kühlluft mittels eines Lüfters über innenliegende Kühlkanäle längs der Antriebswelle des Elektromotors durch dessen Aktivteil geführt ist, und einer Bremsvorrichtung.

Um ein Schienenfahrzeug sicher zum Stehen zu bringen, sind leistungsstarke Bremsen, typischer Weise Reibungsbremsen erforderlich, die darüber hinaus als Parkbremse fungieren. In den allermeisten Fällen wird versucht, die betrieblichen Bremsvorgänge mit einer elektrodynamischen Bremse, d.h. mit Hilfe des Elektromotors abzudecken. Jedoch zwingt die Berücksichtigung der Ausfallsicherheit und einer Motorkennlinie des Elektromotors dazu, an Antriebsachsen eines Triebfahrwerks eine ähnliche, meist sogar die gleiche Bremsausrüstung vorzusehen, wie an antriebslosen Laufachsen.

Als Lösung für eine mechanische Bremse an Antriebs- und Laufachsen ist standardmäßig bekannt, eine innenbelüftete Radbremsscheibe pro Rad des Triebfahrwerks mit einer pneumatischen Bremszange vorzusehen, welche mittels Hebeln auf Bremsbeläge einwirkt. Der Bremsvorgang beruht somit auf einer Wechselwirkung zwischen einer Bremsvorrichtung und einem jeweils abgebremsten Rad des Triebfahrwerks.

Diese Auslegung zur Durchführung von Bremsvorgängen führt zu Bauraumkonflikten und damit zu einem langen und schweren Rahmen des Triebfahrwerks, zudem zu einem kurzen Antriebsstrang und zu großer Höhe der Luftfeder-Oberkante. Außerdem wird ein Gesamtgewicht eines mit dem Triebfahrwerk ausgestatteten Fahrzeugs erhöht, insbesondere die ungefederten Massen, die besonders für eine Beanspruchung eines Gleises maßgeblich sind. Des Weiteren ergeben sich Ventilationsverluste auf einer Innenseite der typischer Weise verrippten Bremsscheibe. Diese treten zusätzlich zu Lüfterverlusten des Elektromotors durchgehend auf, obwohl Bremsscheibe und Elektromotor nicht ständig und selten gleichzeitig Bedarf an Kühlluft haben.

Durch die komplexe Ausführung und die sich daraus ergebende Vielzahl an Teilen, wobei meist pro Triebfahrwerk zwei Radbremsscheiben mit zwei Bremszangen, die durch Hebelmechanismen Federbewegungen des betreffenden Radsatzes ausgleichen, vorgesehen sind, ergeben sich hohe Herstell- und Instandhaltungskosten.

Ausgehend hiervon liegt der Erfindung die Aufgabe zu Grunde, das eingangs genannte Triebfahrwerk derart weiter zu entwickeln, dass sein Aufbau unter Beibehaltung der Bremsfunktion vereinfacht wird.

Diese Aufgabe wird dadurch gelöst, dass die Bremsvorrichtung eine im Bremsfall auf eine Bremsscheibe einwirkende Bremseinrichtung aufweist, wobei die Bremsscheibe dem Elektromotor benachbart auf der Antriebswelle des Elektromotors drehfest angeordnet ist und der Lüfter die Kühlluft sowohl durch den Aktivteil des Elektromotors als auch über/durch die Bremsscheibe führt.

Durch diese Maßnahmen können Aktivteil des Elektromotors und Bremsscheibe durch einen einzigen Lüfter gekühlt werden. Dabei kann der Elektromotor als eigen- oder fremdbelüftete Variante vorliegen.

Bevorzugt fördert der Lüfter die Kühlluft zunächst durch den Aktivteil des Elektromotors und sodann über/durch die Bremsscheibe. Dies hat insbesondere bei der Ausführung der Bremsvorrichtung als Reibungsbremse den Vorteil, dass kein Materialeintrag von der Bremsscheibe aus in den Elektromotor hinein erfolgen kann.

Vorteilhafterweise wirkt die Bremsscheibe als der Lüfter für den Elektromotor, ist in den Elektromotor integriert und fördert die Kühlluft durch die Kühlkanäle.

In dieser Weise wird die Bremsscheibe, die auf der Antriebswelle des Elektromotors angebracht ist, gleichzeitig als Lüfter für den hier eigenbelüfteten Elektromotor genutzt. Damit entfällt der im Stand der Technik sonst übliche gesonderte Lüfter für den Elektromotor.

Da die Bremsvorrichtung nun mehr in der Nähe der Antriebswelle des Elektromotors untergebracht ist, ergibt sich freiwerdender Bauraum in der Nähe der Räder des Triebfahrwerks, die sonst von den bekannten Bremsvorrichtungen genutzt worden sind. Dadurch kann ein Rahmen des Triebfahrwerks kleiner und leichter ausgeführt werden. Der Antriebsstrang hat mehr Bauraum zur Verfügung. Zudem ist eine tiefer ausgelegte Luftfederanordnung möglich.

Die vorzusehende Bremsvorrichtung erspart zudem Gewicht, denn beispielsweise bei der Ausführung als Reibungsbremse wird nur noch eine Bremsscheibe und eine Bremszange benötigt, während im Stand der Technik typischer Weise zwei Bremszangen zum Einsatz kommen. Zudem wird die Masse der Bremsscheibe von dem ungefederten Radsatz auf den gefederten Antrieb verlagert.

Des Weiteren werden die im Stand der Technik eingesetzten insgesamt drei ständig mitlaufenden Lüfter, zwei für die innenbelüfteten Bremsscheiben und ein Lüfter für den Elektromotor, durch einen Lüfter ersetzt, der von der Bremsscheibe gebildet ist. Dadurch ergeben sich geringere Strömungsverluste. Auch ist hervorzuheben, dass eine einfache und robuste Bremszange bei der Ausführung der Bremsvorrichtung als Reibungsbremse zwei aufwendige Bremszangen mit Gestänge ersetzt. Daraus ergibt sich eine weniger komplexe Ausbildung des Triebfahrwerks insgesamt, so dass Herstell- und Instandhaltungskosten verringert sind.

Bevorzugt ist die Bremsscheibe innenbelüftet und wirkt als Radiallüfter für den Elektromotor. Diese Ausführungsform für die Bremsscheibe ist günstig für ihre zusätzliche übernommene Funktion als Lüfter für den Elektromotor.

Vorteilhafter Weise kann zwischen der Bremsscheibe zugewandten Enden der Kühlkanäle des Elektromotors und der Bremsscheibe selbst ein Leitrad angeordnet sein, welches auf der Antriebswelle drehbar gelagert und zur Kompensation auftretenden Dralls einstellbar ist. Ein solches Leitrad hat den Vorteil, Verluste und Lärmentwicklung bei allen Betriebszuständen zu reduzieren.

Es ist bevorzugt, dass ein Strömungskanal zwischen dem Leitrad und einem angrenzenden Gehäuseabschnitt des Elektromotors mittels eines schaltbaren Elements wenigstens teilweise verschließbar ist. In dieser Weise lässt sich der Kühlluftstrom drosseln oder auch absperren, um Verluste und Lärm bei Betriebszuständen ohne Kühlluftbedarf zu minimieren. Dies kann beispielsweise dann der Fall sein, wenn sich ein Schienenfahrzeug, bei dem das Triebfahrwerk eingesetzt ist, in Fahrt befindet.

Zu demselben Zweck kann vorgesehen sein, dass das Leitrad im Wesentlichen parallel zueinander verlaufende, getrennte Strömungskanäle für seine beiden Drehrichtungen aufweist und ein Schaltelement zum Umschalten zwischen den beiden Strömungskanälen vorgesehen ist. Mit Hilfe des Schaltelements kann dann sowohl zwischen den beiden Strömungskanälen umgeschaltet als auch beide Strömungskanäle abgesperrt werden. Hierdurch können Verluste und Geräuschentwicklung bei allen Betriebszuständen des Triebfahrwerks minimiert werden.

Die Bremsscheibe kann an einer einem Getriebe abgewandten Seite des Elektromotors angeordnet sein und die auf die Bremsscheibe einwirkende Bremseinrichtung kann in Freiräumen ober- oder unterhalb eines Rahmens des Triebfahrwerks angeordnet sein. Diese Ausführungsform gestattet eine geeignete Unterbringung der auf die Bremsscheibe einwirkenden Bremseinrichtung im Triebfahrwerk.

Alternativ dazu kann die Bremsscheibe an einer einem Getriebe zugewandten Seite des Elektromotors angeordnet sein und die auf die Bremsscheibe einwirkende Bremseinrichtung kann in Freiräumen um eine zwischen dem Elektromotor und dem Getriebe liegenden Kupplung angeordnet sein. Auch hierdurch ergibt sich eine geeignete Unterbringung der auf die Bremsscheibe einwirkenden Bremseinrichtung.

Die Bremsvorrichtung kann von verschiedener Bauart sein. Beispielsweise kann sie als Reibungsbremse ausgebildet sein und somit eine Bremszange aufweisen, die mit der Bremsscheibe zu Bremszwecken zusammenwirkt. Dabei kann die Bremszange hydraulisch, elektromechanisch oder pneumatisch betätigt sein. Dabei bietet die Ausführung als hydraulisch oder elektromechanisch betätigte Bremszange den Vorteil, dass sie direkt an einem Gehäuse des Elektromotors angeflanscht werden kann und keinerlei Relativbewegung zur Bremsscheibe aufnehmen muss.

Alternativ zu der Ausführung der Bremsvorrichtung als Reibungsbremse kann diese auch als Wirbelstrombremse ausgebildet sein.

Die Bremsscheibe ist bevorzugt aus Verbundwerkstoffen auf Silziumcarbid- und/oder Karbon-Basis hergestellt. Diese Materialauswahl gewährleistet eine erhöhte Wärmekapazität und geringes Gewicht sowie geringen Verschleiß für die Ausführung als Reibungsbremse.

Ausführungsbeispiele der Erfindung werden nachfolgend unter Bezugnahme auf die Zeichnungen noch näher erläutert. Es zeigen:
- Figur 1: eine Teil-Querschnittsansicht eines angetriebenen Radsatzes für ein Schienenfahrzeug in einer ersten Ausführungsform,
- Figur 2: eine Teil-Querschnittsansicht eines angetriebenen Radsatzes eines Triebfahrwerks für ein Schienenfahrzeug in einer zweiten Ausführungsform,
- Figuren 3-5: jeweils Teil-Querschnittsansichten verschiedener Betriebszustände eines Endabschnitts eines Elektromotors für einen angetriebenen Radsatz eines Triebfahrwerks für ein Schienenfahrzeug in einer dritten Ausführungsform, und
- Figur 6: eine Teil-Querschnittsansicht eines angetriebenen Radsatzes eines Triebfahrwerks für ein Schienenfahrzeug in einer sechsten Ausführungsform.

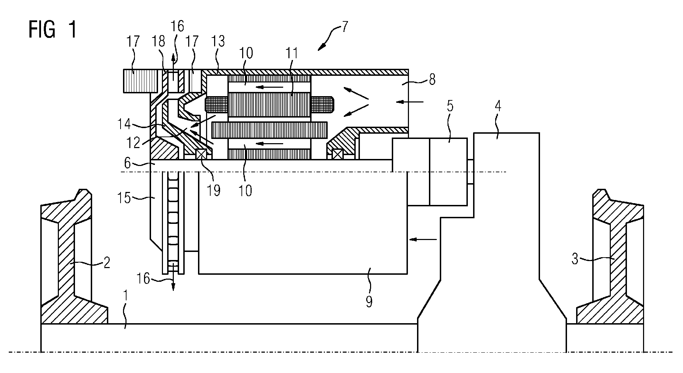

Figur 1 zeigt einen Teil eines Triebfahrwerks für ein Schienenfahrzeug, mit einem Radsatz, der zwei, über eine Radsatzwelle 1 angetriebene Räder 2, 3 aufweist. Die Radsatzwelle 1 ist über ein Getriebe 4 und eine Kupplung 5 mit einer Antriebswelle 6 eines Elektromotors 7 verbunden. Dabei sitzt eine Hälfte der Kupplung 5 auf der Antriebswelle 6 des Elektromotors 7. Von dem Elektromotor 7 bereitgestellte Antriebsleistung wird somit über die Antriebswelle 6, die Kupplung 5 und das Getriebe 4 auf die Radsatzwelle 1 übertragen.

Der Elektromotor 7 ist von eigenbelüfteter Bauart und weist im Bereich der Kupplung 5 eine Kühlluft-Eintrittsöffnung 8 auf, über die Kühlluft zur Kühlung von Komponenten des Elektromotors 7 angesaugt wird. Die Kühlluft gelangt von der Kühlluft-Eintrittsöffnung 8 im Bereich eines Düsengitters 9 über Kühlkanalzweige 10 im Bereich eines Aktivteils 11 des Elektromotors 7 zu einer Kühlluft-Auslassöffnung 12, die zwischen einem Gehäuse 13 des Elektromotors 7 und einem Leitrad 14 ausgebildet ist.

Eine Bremsscheibe 15, die als innenbelüftete Scheibenbremse vorliegt und drehfest auf der Antriebswelle 6 angeordnet ist, dient zur Förderung der Kühlluft von der Kühlluft-Einlassöffnung 8 aus bis zum gegenüberliegenden Ende des Elektromotors 7. Die Bremsscheibe 15 ist dem Leitrad 4 axial unmittelbar benachbart angeordnet, so dass von einer Integration der Bremsscheibe 15 in den Elektromotor 7 gesprochen werden kann. Kühlluft, welche den Aktivteil 11 des Elektromotors 7 passiert hat, verlässt den Elektromotor 7 über eine radiale Öffnung 16 der Bremsscheibe 15. Im Bereich der Bremsscheibe 15 schließt sich an das Gehäuse 13 des Elektromotors 7 eine Bremseinrichtung 17 an, welche im Bremsfalle mit dem äußeren Rand 18 der Bremsscheibe 15 zusammenwirkt. Die Bremseinrichtung 17 kann von verschiedener Bauart sein, so dass beispielsweise eine Reibungsbremse und/oder eine Wirbelstrombremse realisiert sind, und unmittelbar am Gehäuse 13 angeflanscht sein.

Das Leitrad 14 ist fest mit dem Gehäuse des Motors verbunden und kann derart einstellbar ausgeführt sein, dass auftretender Drall reduziert wird, um beispielsweise Verluste und Geräuschentwicklungen bei verschiedenen Betriebszuständen zu vermindern. Die Antriebswelle 6 ist im Gehäuse 13 über geeignete Lager 19 drehbar gelagert.

Bei dem Ausführungsbeispiel nach Figur 1 werden Freiräume über oder unter einem Rahmen des Triebfahrwerks genutzt, um die Bremseinrichtung, die beispielweise als Bremszange ausgeführt ist, unterzubringen.

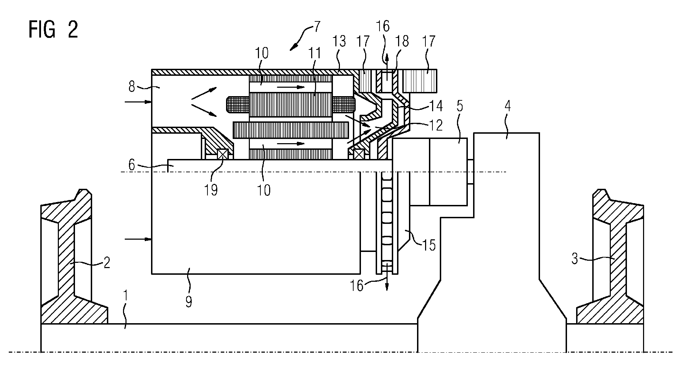

Figur 2 zeigt eine Abwandlung der anhand von Figur 1 erläuterten Ausführungsform, bei der funktionsgleiche Komponenten mit denselben Bezugszeichen bezeichnet sind. Im Wesentlichen unterscheidet sich die Ausführungsform nach Figur 2 von derjenigen nach Figur 1 dadurch, dass die Bremsscheibe 15 nicht, wie nach Figur 1, am von der Kupplung 5 entfernten, sondern am der Kupplung 5 benachbarten Ende des Elektromotors 7 angeordnet ist. Insofern kehrt sich die Richtung der Strömung der Kühlluft von der Kühlluft-Eintrittsöffnung 8 aus entlang der Antriebswelle 6 um, wobei jedoch beibehalten wird, dass die Kühlluft längs der Antriebswelle 6 des Elektromotors 7 gefördert wird.

Bei dem Ausführungsbeispiel nach Figur 2 ist die Bremseinrichtung 17 im Bereich von Freiräumen um die zwischen Elektromotor 7 und Getriebe 4 liegende Kupplung 5 angeordnet.

Für die weiteren, in Figur 2 dargestellten Komponenten gelten dieselben Aussagen, wie sie anhand der Beschreibung der Ausführungsform nach Figur 1 getroffen sind.

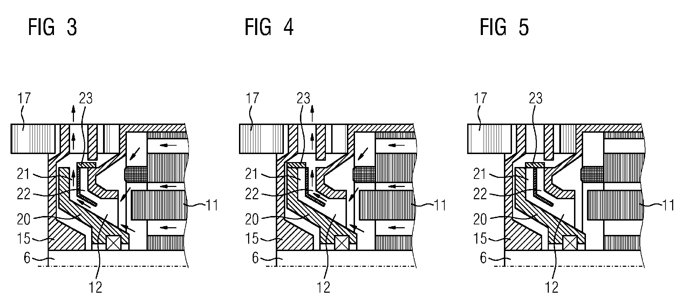

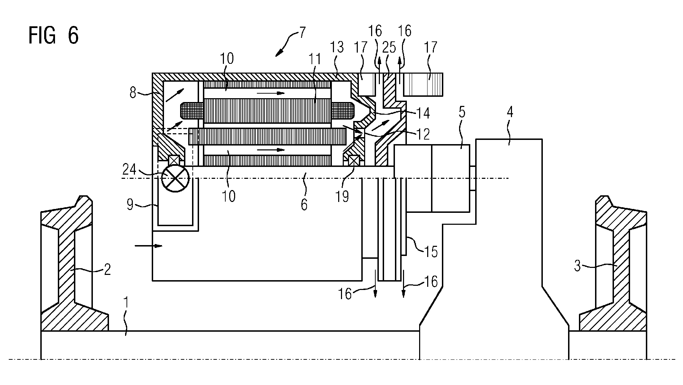

Die Figuren 3 bis 5 zeigen jeweils einen Endabschnitt des Elektromotors 7 in Zusammensicht mit einem Leitrad 20 und der Bremsscheibe 15. Das Leitrad 20 weist zwei, im Wesentlichen parallel zueinander verlaufende Strömungskanäle 21, 22 auf, die jeweils einer Drehrichtung des Leitrades 20 zugeordnet sind. Im Bereich von radialen Ausgangsöffnungen der Strömungskanäle 21, 22 ist ein einstellbares Schaltelement 23 vorgesehen, mit dem entweder einer der beiden Strömungskanäle 21, 22 verschlossen (Figur 3, Figur 4) oder auch beide Strömungskanäle gemeinsam verschlossen (Figur 5) werden können. Das Schaltelement 2 ist derart einstellbar, dass die Kühlluft sowohl zu einem gewünschten Anteil als auch vollständig gedrosselt bzw. abgesperrt werden kann. In einer vereinfachten Ausführungsform (nicht dargestellt) ist lediglich ein einziger Strömungskanal zwischen dem Leitrad 20 und einem zugeordneten Gehäuseabschnitt des Elektromotors 7 vorgesehen, dessen radiales Ende ebenfalls mit einem schaltbaren Element absperrbar ist. Diese Maßnahmen dienen dazu, etwaige Verluste und Geräuschentwicklung bei sämtlichen Betriebszuständen des Triebfahrwerks zu minimieren. Insbesondere kommt ein vollständiges Absperren der Kühlluft in Betriebszuständen ohne Leistungsaufnahme, jedoch bei schneller Fahrt des Triebfahrwerks in Frage, weil dann ein Kühlluftbedarf nicht vorliegt. Figur 6 zeigt ein Ausführungsbeispiel, bei dem der Elektromotor 7 mit Hilfe eines externen Lüfters 24 belüftet ist. Die Kühlluft passiert, wie bei den Ausführungsbeispielen nach Figuren 1 und 2, zunächst den Aktivteil 11 des Elektromotors 7 und erreicht sodann eine dann ebenfalls fremdbelüftete Bremsscheibe 25.

## Patentansprüche

1. Triebfahrwerk für ein Schienenfahrzeug, mit einem belüfteten Elektromotor (7), der eine Antriebswelle (6) aufweist und bei dem Kühlluft mittels eines Lüfters über innenliegende Kühlkanäle (10) längs der Antriebswelle (6) des Elektromotors durch dessen Aktivteil (11) geführt ist, und einer Bremsvorrichtung,
**dadurch gekennzeichnet, dass**
die Bremsvorrichtung eine im Bremsfall auf eine Bremsscheibe (15; 25) einwirkende Bremseinrichtung (17) aufweist, wobei die Bremsscheibe (15; 25) dem Elektromotor (7) benachbart auf der Antriebswelle (6) des Elektromotors (7) drehfest angeordnet ist und der Lüfter die Kühlluft sowohl durch den Aktivteil (11) des Elektromotors (7) als auch über/durch die Bremsscheibe (15; 25) führt.

2. Triebfahrwerk nach einem der Anspruch 1,
**dadurch gekennzeichnet, dass**
der Lüfter die Kühlluft zunächst durch den Aktivteil (11) des Elektromotors (7) und sodann über/durch die Bremsscheibe (15; 25) fördert.

3. Triebfahrwerk nach Anspruch 1 oder 2,
**dadurch gekennzeichnet, dass**
das die Bremsscheibe (15) als der Lüfter für den Elektromotor (7) wirkt, in den Elektromotor (7) integriert ist und die Kühlluft durch die Kühlkanäle (10) fördert.

4. Triebfahrwerk nach einem der Ansprüche 1 bis 3,
**dadurch gekennzeichnet, dass**
die Bremsscheibe (15) innenbelüftet ist und als Radiallüfter für den Elektromotor (7) wirkt.

5. Triebfahrwerk nach Anspruch 4,
**dadurch gekennzeichnet, dass**
zwischen der Bremsscheibe (15) zugewandten Enden der Kühlkanäle des Elektromotors (7) und der Bremsscheibe (15) selbst ein Leitrad (14; 20) angeordnet ist, das zur Kompensation auftretenden Dralls einstellbar ist.

6. Triebfahrwerk nach Anspruch 5,
**dadurch gekennzeichnet, dass**
ein Strömungskanal zwischen dem Leitrad (20) und einem angrenzenden Gehäuseabschnitt des Elektromotors (7) mittels eines schaltbaren Elements (23) wenigstens teilweise verschließbar ist.

7. Triebfahrwerk nach Anspruch 5,
**dadurch gekennzeichnet, dass**
das Leitrad (20) im Wesentlichen parallel zueinander verlaufende, getrennte Strömungskanäle (21;22) für seine beiden Drehrichtungen aufweist und ein Schaltelement (23) zum Umschalten zwischen den beiden Strömungskanälen vorgesehen ist.

8. Triebfahrwerk nach einem der Ansprüche 1 oder 2,
**dadurch gekennzeichnet, dass**
der Lüfter als externer Lüfter (24) ausgeführt ist, so dass der Elektromotor (7) und die Bremsscheibe (15; 25) fremdbelüftet sind.

9. Triebfahrwerk nach einem der Ansprüche 1 bis 8,
**dadurch gekennzeichnet, dass**
die Bremsscheibe (15) an einer einem Getriebe (4) abgewandten Seite des Elektromotors (7) angeordnet ist und die auf die Bremsscheibe (15) einwirkende Bremseinrichtung (17) in Freiräumen ober- oder unterhalb eines Rahmens des Triebfahrwerks angeordnet ist.

10. Triebfahrwerk nach einem der Ansprüche 1 bis 9,
**dadurch gekennzeichnet, dass**
die Bremsscheibe (15; 25) an einer einem Getriebe (4) zugewandten Seite des Elektromotors (7) angeordnet ist und die auf die Bremsscheibe (15; 25) einwirkende Bremseinrichtung (17) in Freiräumen um eine zwischen dem Elektromotor (7) und dem Getriebe (4) liegende Kupplung (5) angeordnet ist.

11. Triebfahrwerk nach einem der Ansprüche 1 bis 10,
**dadurch gekennzeichnet, dass**
die Bremsvorrichtung als Reibungsbremse ausgebildet ist.

12. Triebfahrwerk nach Anspruch 11,
**dadurch gekennzeichnet, dass**
die Bremseinrichtung (17) als hydraulisch, elektromechanisch oder pneumatisch betätigte Bremszange ausgebildet ist.

13. Triebfahrwerk nach einem der Ansprüche 1 bis 10,
**dadurch gekennzeichnet, dass**
die Bremsvorrichtung als Wirbelstrombremse ausgebildet ist.

14. Triebfahrwerk nach einem der Ansprüche 1 bis 13,
**dadurch gekennzeichnet, dass**
die Bremsscheibe (15; 25) aus Verbundwerkstoffen auf Siliziumcarbid- und/oder Karbon-Basis hergestellt ist.
